# EUROPEAN PATENT APPLICATION

(11) **EP 1 571 183 A1**
(43) Date of publication of application: **07.09.2005**
(21) Application number: 03777353.8
(22) Date of filing: 08.12.2003
(51) Int. Cl.: C09D 7/14, B05D 3/00, B05D 7/14

(54) **PAINT DECISION METHOD, PAINT MANUFACTURING METHOD, COATING METHOD, PAINT DECISION SERVER, AND PAINT DECISION PROGRAM**

(30) Priority: 10.12.2002 JP 2002358077
(71) Applicant: Nippon Paint Co., Ltd., Osaka 531-8511 (JP)
(72) Inventor: ANDO, Kenji, Yokohama-shi, Kanagawa 225-0015 (JP); NONOGAKI, Yoshihiro, Handa-shi, Aichi 475-0019 (JP)
(74) Representative: Rees, Alexander Ellison
(86) International application number: PCT/JP2003/015678
(87) International publication number: WO 2004/053001

(57) **Abstract**

A method of designing paint is disclosed, the method including the steps of: acquiring color numerical information of a designated color from a client computer connected to a server computer, determining ingredients of the paint based on the acquired color numerical information and paint ingredient information, predicting performances of the ingredient-determined paint based on paint performance prediction information, and verifying the predicted performances of the ingredient-determined paint. The step of predicting the performances and the step of verifying the predicted performances ensure the designing of paint of which performances are approvable.

## Description

### BACKGROUND OF THE INVENTION

### 1. Field of the Invention

The present invention generally relates to a method of designing paint, and particularly, to a method of designing, producing, and painting (applying) paint in which performances of the paint can be predicted and the predicted performances of the paint can be verified. The present invention further relates to a server computer for designing paint, and a computer program thereof.

### 2. Description of the Related Art

Conventionally, a manufacturer of automobiles or consumer electronics, for example, offers a selection of product colors, and consumers make their selection from the offered product colors. The consumers, however, may not be able to select their most favored product colors because the most favored product colors are not offered by the manufacturer.

It would be beneficial for the consumer if the consumer could select the most favored color, and purchase an automobile or a home appliance, for example, painted in the selected most favored color.

For example, Japanese Laid-Open Patent Application No. 11-66119 discloses a method of selecting the color of an automobile using a personal computer. A user can select a color from a color palette including solid colors and metallic colors, for example, and simulate an automobile painted in the selected color. The user can also obtain information about the ingredients of the paint that realizes the selected color.

The personal computer described in the above laid-open patent application displays the color palette stored in a storage unit. When the user select a color from the color pallet, the personal computer generates and displays a three dimensional computer graphic of the automobile painted in the selected color using three dimensional shape data of the automobile and the spectral reflection factor of the selected color.

Consumers, however, are anxious for further improvements. Even if they can select a color from such a color palette, they are not satisfied. The consumers desire to create a color that fits their own personalities.

It is therefore necessary to prepare the mixture of paints that accurately fits a consumer's demand in a short time period without involving any expert.

Japanese Laid-Open Patent Application No. 10-324829 discloses a system for determining the ingredients of a paint. The system includes a computer, a color display, a multi angular spectrophotometer, and an electronic balance. The computer includes a unit for computing the mixture of paints, a color data file, and a database access unit for accessing a database server connected via a communication channel. The database server stores data of compound ingredients for paints and mixture information of paints for final coating of an automobile.

The above system can determine the mixture of paints (color matching), but it fails to compute the painting workability of the mixed paints and the coating film performance of the mixed paints. Due to this failure, the mixture of paints (the color-matched paint) may be unusable because the painting performance of the mixed paints may not be good enough, and the coating performance of the mixed paints may not be practical.

Due to these problems, the paint produced by the conventional methods may be unusable because painting workability of the produced paint is not good, or the coating film performance is not practical, for example.

According to inventions disclosed in Japanese Patent Laid-Open Application No. 2002-279000, paint is produced in a color range that can be achieved by mixing multiple elementary colors determined by the combination of resin, dye, and pigment. However, the color range of the produced paint is limited. The painting workability and coating film performances are not considered.

If the painting workability of produced paint are not good, which is revealed in the painting line, the operations until then and the produced paint are wasted.

If the coating film performances are not good, the insufficient coating film performances may generate complaints from end users who buy products coated with the paint.

### SUMMARY OF THE INVENTION

Accordingly, it is a general object of the present invention to provide a novel and useful method of designing paint in which at least one of the above problems is eliminated.

Another and more specific object of the present invention is to provide a method of designing, producing, and painting paint in which the performances of the paint are predicted and the predicted performances of the paint are verified so as to design paint of which performances are approvable.

Yet another object of the present invention is to provide a server computer for designing paint and a computer program that causes a computer to operate as the server computer in which the performances of the paint are predicted and the predicted performances of the paint are verified so as to design paint of which performances are approvable.

To achieve one or more of the above objects, a method of designing paint for a server computer, according to an aspect of the present invention, includes the steps of: acquiring color numerical information of a designated color from a client computer connected to the server computer; determining ingredients of the paint based on the acquired color numerical information and paint ingredient information; predicting performances of the ingredient-determined paint based on paint performance prediction information; and verifying the predicted performances of the ingredient-determined paint.

Since the method includes the step of predicting the performances of the ingredient-determined paint and the step of verifying the predicted performances of the ingredient-determined paint, the method can assure the designing of paint of which performances are approvable.

Other objects, features, and advantages of the present invention will become more apparent from the following detailed description when read in conjunction with the accompanying drawings.

### BRIEF DESCRIPTION OF THE DRAWINGS

The file of this patent contains at least one drawing executed in color. Copies of this patent with color drawing(s) will be provided by the Office upon request and payment of the necessary fee.
FIG. 1 is a schematic diagram showing the structure of a system according to an embodiment of the present invention;
FIG. 2 is a block diagram showing the structure of a server computer for designing paint according to an embodiment;
FIG. 3 is a table showing a database storing information about designed paint according to an embodiment;
FIG. 4 is a flowchart showing processing by the system according to an embodiment;
FIG. 5 is a schematic diagram showing a screen for inputting a designated color by a client computer for designing the paint according to an embodiment;
FIG. 6 is a table listing determined ingredients according to an embodiment;
FIG. 7 is a schematic diagram showing color charts for comparing a targeted color and the computed color by computer color matching according to an embodiment;
FIG. 8A through 8C are graphs showing the spectral reflection factor at various angles as a function of wavelength according to an embodiment;
FIG. 9 is a table showing verification of predicted performances according to an embodiment;
FIG. 10 is a schematic diagram for explaining a first variation of system structure according to an embodiment;
FIG. 11 is a schematic diagram for explaining a second variation of system structure according to an embodiment;
FIG. 12 is a schematic diagram for explaining a third variation of system structure according to an embodiment;
FIG. 13 is a schematic diagram for explaining a fourth variation of system structure according to an embodiment;
FIG. 14 is a schematic diagram for explaining a fifth variation of system structure according to an embodiment;
FIG. 15 is a first table for explaining the system structures according to embodiments and corresponding processing; and
FIG. 16 is a second table for explaining the system structures according to embodiments and corresponding processing.

### DETAILED DESCRIPTION OF THE PREFERRED EMBODIMENTS

A detailed description of the preferred embodiments of the present invention is given below with reference to the drawings.

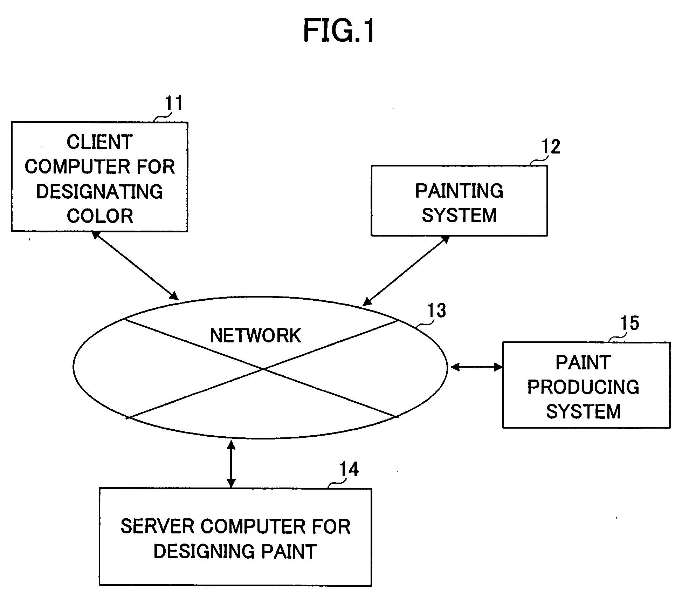

FIG. 1 is a schematic diagram showing the structure of a system. The system shown in FIG. 1 includes a client computer for designating paint color 11 (hereinafter referred to as client computer), a painting system 12, a communication network 13, a server computer for designing paint 14 (hereinafter referred to as a server computer), and a paint producing system 15.

The client computer for designating paint color 11 is a computer having a 2-dimensional or 3-dimensional color display unit. An operator operates the client computer 11 and designates colors of paint for an automobile, for example. The color display unit is preferably a high resolution display unit. The server computer for designing paint 14 determines the ingredients of paint based on the colors designated by the operator using the client computer 11. The paint producing system 15 produces the paint of which ingredients are determined by the server computer 14. The painting system 12 paints an automobile, for example, with the paint produced by the paint producing system 15. The client computer 11 may be included in the painting system 12 as described below.

When the client computer 11 is provided with a 3-dimensional color display unit, the operator can rotate an object displayed therein 3-dimensionally, and view the color of the object from various angles. The color of luster paint such as metal flake and pearl mica depends on the angle of view. The operator can see the color of paint on the 3-dimensional color display unit before designating it.

The painting system 12 paints an object using the paint produced by the paint producing system 15. The painting system 12 is usually owned by a painting company (painter) that paints cellular phones, home appliances, and automobiles, for example, as a business. The painting system 12 is connected to the communication network 13.

The communication network 13 may be a public channel or a leased channel, and may be wireline or wireless.

The server computer 14 determines ingredients of paint in accordance with a designated color transmitted from the client computer 11. The server computer 14 includes: a color information acquiring unit, an ingredient determining unit, a performance predicting unit, and a performance verifying unit. The color information acquiring unit acquires color numerical information of the designated color from the client computer 11. The ingredient determining unit determines the ingredients of paint based on both the color numerical information acquired by the color information acquiring unit and the information of raw materials stored in a raw material information database. The performance predicting unit predicts the performances of the paint of which ingredients are determined by the ingredient determining unit based on the information for predicting paint performances stored in a paint performance prediction information database. The performance verifying unit verifies the performances predicted by the performance predicting unit.

The "designated color" means the color of an automobile or a home appliance, for example, that a customer desires. The designated color may be chosen from existing color samples, or may be created using computer graphics.

The server computer 14 may be included in the painting system 12 as described below.

The paint producing system 15 produces the paint of which ingredients are determined by the server computer 14. The paint producing system 15 may be included in the server computer 14 or the painting system 12.

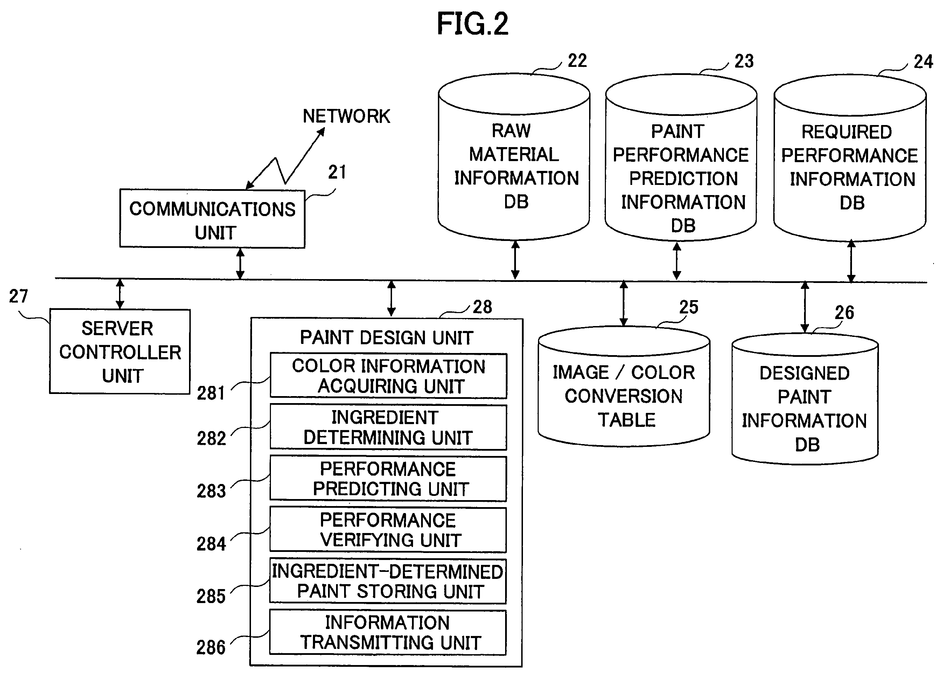

FIG. 2 is a block diagram showing the structure of the server computer 14. The server computer 14 includes: a communications unit 21, a raw material information database (DB) 22, an paint performance prediction information database (DB) 23, a required performance information database (DB) 24, an image information/color information conversion table 25, a designed paint information database (DB) 26, a server controller unit 27, and a paint design unit 28.

The communications unit 21, the raw material information database (DB) 22, the paint performance prediction information database (DB) 23, the required performance information database (DB) 24, the image information/color information conversion table 25, the designed paint information database (DB) 26, the server controller unit 27, and the paint design unit 28 of the server computer 14 may be embodied as computer programs that cause a computer to perform respective functions. The computer programs may be stored in the secondary storage of the computer in this case.

The communications unit 21 interfaces the server computer 14 to the network 13. The communications unit 21 receives and transmits information related to the designing of paint under the control of the server controller unit 27. The communications unit 21 may support the TCP/IP (Transmission Control Protocol/ Internet Protocol).

The raw material information database 22 is a database storing the information of raw materials of paint. The raw material information database 22 contains data of specific wavelengths and spectral reflection factors, for example, of chromatic color pigments (including black and grey), luster color materials (metal flake and pearl mica, for example), and an achromatic color pigment (white), material by material. The data of specific wavelengths and spectral reflection factors, for example, are used for determining the mixing ratio of materials.

The performance prediction information database 23 stores information such as painting workability, coating film performances, and paint performances, the information being digitized based on previous experience. The painting workability may include smoothness, haziness, mottling, sagging, popping, and applicability for production line, for example. The coating film performances may include weather durability (degradation due to the sunshine), corrosion resistance (degradation due to oxidation), adhesiveness, chipping resistance, hardness, electric resistance, gloss, and chemical resistance, for example. The paint performance may include storage stability, dilution stability, circulation stability, applicability for parts, cost, and lead time, for example.

The performance prediction information database 23 may be included in the raw material information database 22 because data are stored raw material by raw material.

The required performance information database 24 contains required performances of paint that each customer desires. The required performances may preferably correspond to items stored in the performance prediction information database 23.

The image / color conversion table 25 converts the designated color input by the operator through the 2-dimensional or 3-dimensional color display unit of the client computer 11 into color numerical information based on which the ingredients of paint are determined. In a case in which the designated color is represented in the RGB color space, and the ingredients of paint are to be determined based on the spectral reflection factor thereof, for example, the image / color conversion table 25 converts RGB data into spectral reflection factor data.

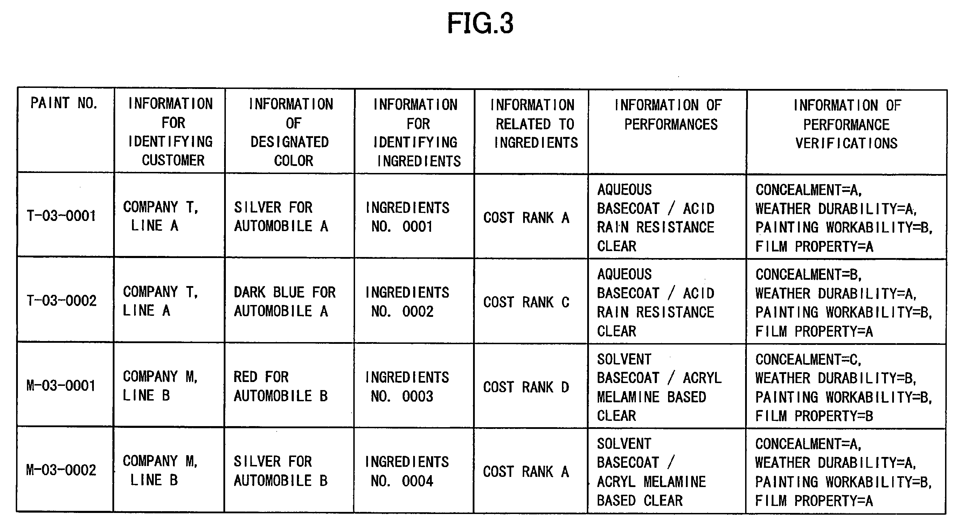

The designed paint information database 26 stores the ingredients of paint designed by the server computer 14. As shown in FIG. 3, the designed paint information database 26 contains a designed paint number, information for identifying a user, information of a designated color, information for identifying designed paint ingredients, information related to the designed paint ingredients, information of performances, and information of performance verifications, for example.

The server controller unit 27 controls the operations of the communications unit 21, the raw material information database (DB) 22, the paint performance prediction information database (DB) 23, the required performance information database (DB) 24, the image information/color information conversion table 25, the designed paint information database (DB) 26, and the paint design unit 28.

The paint design unit 28 includes: a color information acquiring unit 281, an ingredient determining unit 282, a performance predicting unit 283, a performance verifying unit 284, an ingredient-determined paint storing unit 285, and an information transmitting unit 286.

The color information acquiring unit 281 acquires color numerical information of the designated color from the client computer 11. The ingredient determining unit 282 determines the ingredients of paint based on both the color numerical information acquired by the color information acquiring unit and the information of raw material stored in a raw material information database. The performance predicting unit 283 predicts the performances of the paint of which ingredients are determined by the ingredient determining unit 282 based on the information for predicting paint performances stored in a paint performance prediction information database 23. The performance verifying unit 284 verifies the performances predicted by the performance predicting unit 283. The ingredient-determined paint storing unit 285 stores the ingredients verified and approved by the performance verifying unit 284. The information transmitting unit 286 transmits information related to the designed paint stored in the ingredient-determined paint storing unit 285.

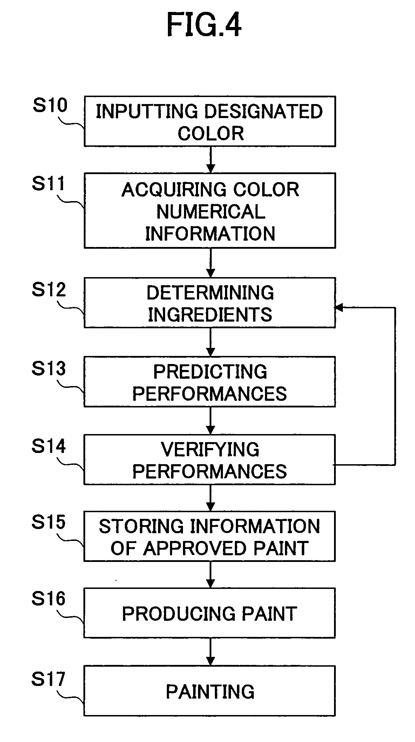

FIG. 4 is a flowchart showing processing by the system.

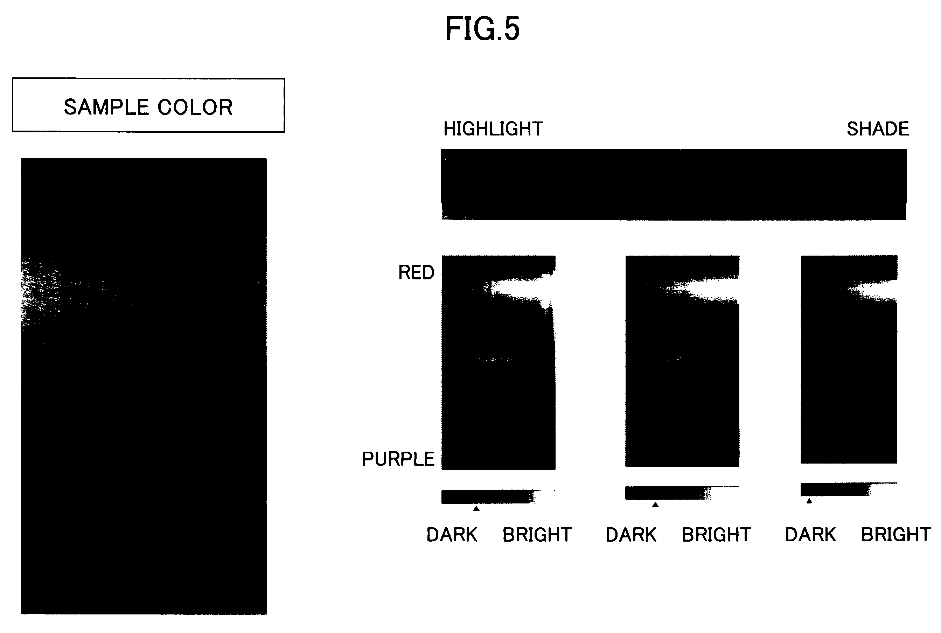

The operator inputs a color of paint for painting an automobile, for example, by operating the client computer 11 equipped with the 2-dimensional or 3-dimensional color display unit (step S10). FIG. 5 shows an exemplary screen for inputting the designated color. Referring to a color chart (sample color), the operator can designate a color between a highlight region and a shade region with a pointing device such as a mouse. The client computer 11 may convert the color designated by the operator into a color code, and transmit the color code to the server computer 14 via the network 13.

The color information acquiring unit 281 of the server computer 14 obtains color numerical information related to the designated color input to the client computer 11 (step S11). The operator can not only select an existing color from the color chart but also create a favorite color. If the designated color transmitted from the client computer 11 is RGB data, and the multi angle spectral reflection factor or the various angle spectral reflection factor is to be used as the color numerical information, the RGB data are converted into the multi angle spectral reflection factor or the various angle spectral reflection factor with reference to the image / color conversion table 25.

Subsequently, the ingredient determining unit 282 of the server computer 14 determines the ingredients of paint based on the color numerical information obtained by the color information acquiring unit 281 and the information of raw material stored in the raw material information database 22 (step S12).

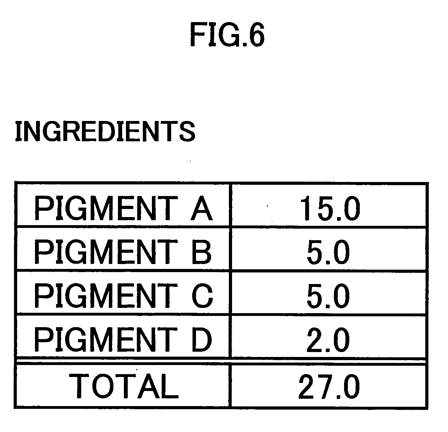

FIG. 6 is an exemplary table listing determined ingredients of paint.

Color computation (computation of mixing ingredients) is performed by computer color matching. The color computation includes computation of pigment ingredients for matching a diffused illumination corollary spectral pattern and computation of luster materials for matching a spectral reflection factor of various angles. The computer color matching often generates multiple sets of ingredients.

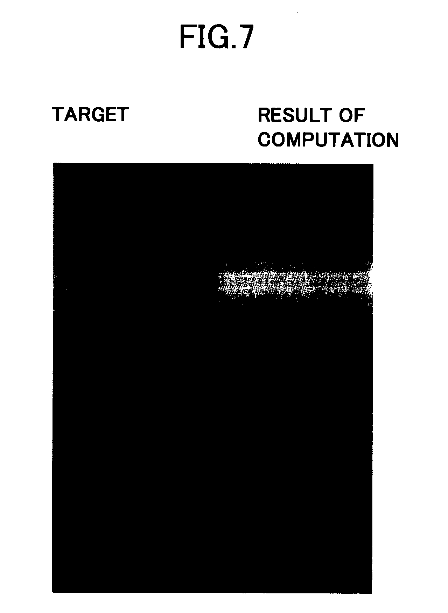

FIG. 7 is a color diagram showing the comparison between color that is targeted and color that is obtained as a result of computer color matching. The vertical axis indicates the viewing angle.

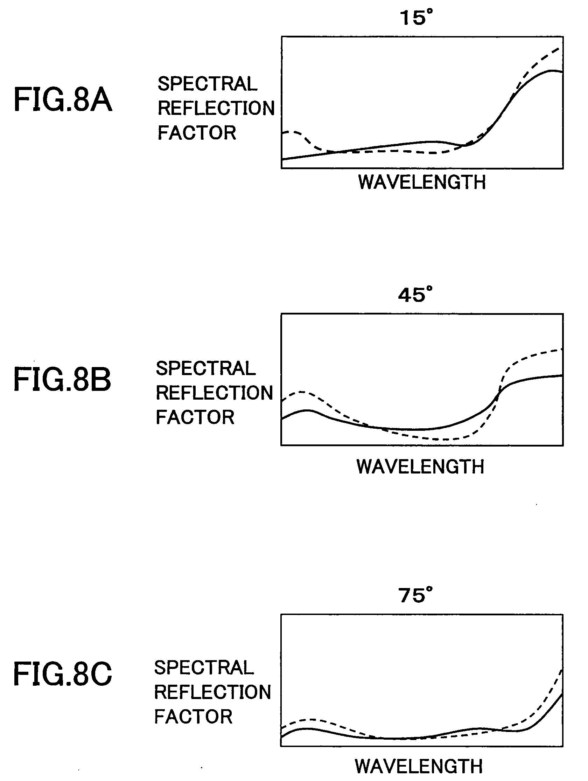

FIGs. 8A through 8C are graphs showing the spectral reflection factor as a function of wavelength at each angle.

The performance predicting unit 283 predicts the performances of the paint of which ingredients are determined by the ingredient determining unit 282 (step S13). The performance predicting unit 283 predicts the painting workability, the coating film performances, and the paint performances, for example, of the ingredient-determined paint. Specifically, the performance predicting unit 283 uses data of each raw material and accumulated information of performances obtained from designed paint in the past so as to predict performance in each category such as weather durability, painting workability, and coating film performance.

The performance verifying unit 284 verifies the performances predicted by the performance predicting unit 283 based on the information about the required performances stored in the required performance information database 24 (step S14).

The performance verifying unit 284 determines the goodness of fit of the predicted performances to the required performances, and represents the goodness of fit with discrete values. The goodness of fit may be determined by a 3-point method, for example. When the predicted performance is above the required performance, "3" points are given; when the predicted performance is below the required performance, "1" point is given; and when the predicted performance is the same as the required performance, "2" points are given.

A determination is made based on an agreement with the customer. According to one agreement, if all performances are given "3" points, the ingredient-determined paint is approved. According to another agreement, if any performance is given "1" point, the ingredient-determined paint is rejected, and otherwise, it is approved.

According to yet another agreement, if at least one performance is given "2" points, the ingredient-determined paint is subject to confirmation by the customer. According to yet another agreement, the ingredient-determined paint is always subject to confirmation by the customer in the initial period of operation.

Such an agreement may be made about only important performances. For example, according to an agreement, if all of specific performances are given "3" points, the ingredient-determined paint may be approved. According to another agreement, if any of the specific performances is given "1" point, the ingredient-determined paint may be rejected, and otherwise the ingredient-determined paint may be approved.

The determination may be made based on a method other than the 3-point method. The agreement with the customer is not limited to the above examples.

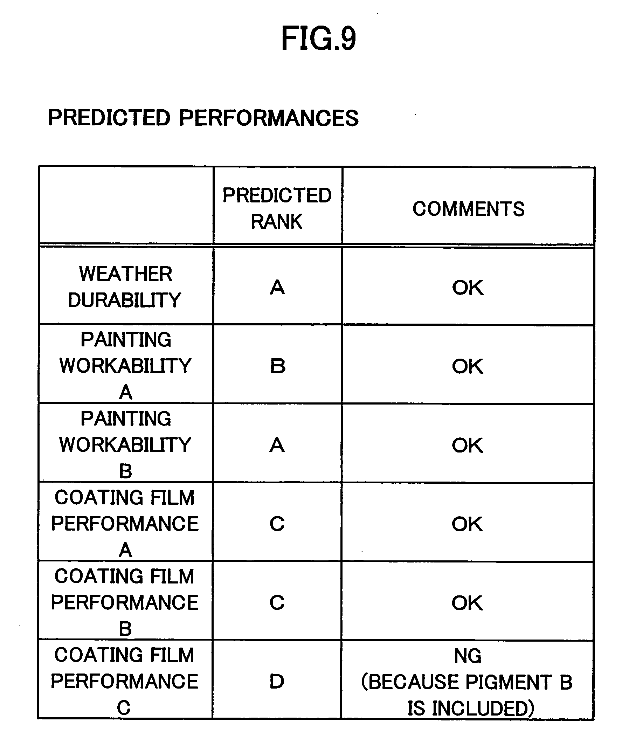

FIG. 9 is a schematic diagram showing the result of verification of predicted performances. As shown in FIG. 9, each performance such as weather durability, painting workability, coating film performance is verified in a range from A through D.

The step of verifying the performances of the ingredient-determined paint may be automated by representing the result of verification, that is, the goodness of fit between the predicted performances and the required performances. In addition, the result of verification of the ingredient-determined paint can be expressed graphically using graphs and tables so that the customer can understand the result of verification easily. If there are multiple ingredient-determined paints, the results of verification are preferably to be designed so that all of them can be seen at the same time.

Referring to FIG. 4 again, if the performances of the ingredient-determined paint are not approved by the customer (the predicted performances thereof do not satisfy the required performances of the customer), the process returns to step S12 and the computer color matching is performed again (step S12). Since multiple ingredient-determined paints are usually obtained by computer color matching, another ingredient-determined paint may satisfy the required performances and be approved by the customer.

The performances of the ingredient-determined paint obtained by re-determination are re-predicted (step S13), and are re-verified (step S14). This process is repeated until the performances of the ingredient-determined paint are approved.

If the performances are approved in step S14, a paint number, information for identifying the customer, information of designated color, information for identifying ingredients, information related to ingredients, information of performances, and information of performance verifications are stored in the designed paint information database 26 (step S15).

Subsequent to step S15, the paint producing system produces the ingredient-determined paint based on data stored in the designed paint information database 26 (step S16), and the painting system paints an object with the paint produced by the paint producing system (step S17).

The system shown in FIG. 1 includes the client computer 11, the painting system 12, the server computer 14, and the paint producing system 15. The client computer 11 performs step S10 in the flowchart shown in FIG. 4; the server computer 14 performs steps S11 through S15 in the flowchart shown in FIG. 4; the paint producing system 15 performs step S16 in the flowchart shown in FIG. 4; and the painting system 12 performs step S17 in the flowchart shown in FIG. 4.

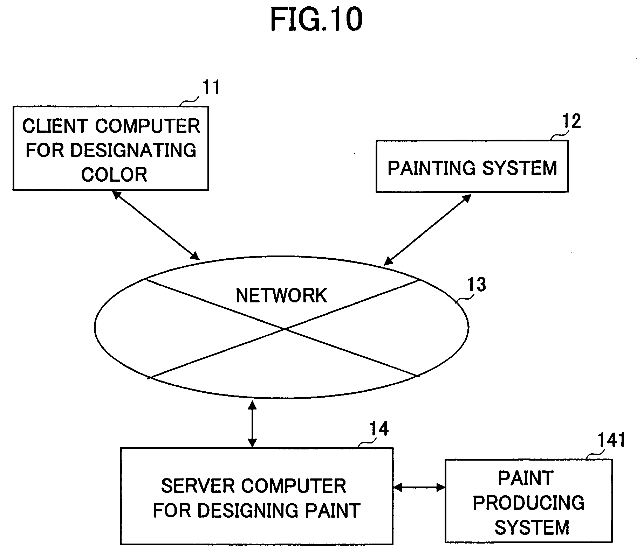

The system shown in FIG. 1 can be modified. For example, the server computer may include the paint producing system, or the paint producing system may include the server computer. FIG. 10 shows a variation of the system in which the server computer 14 includes a paint producing system 141.

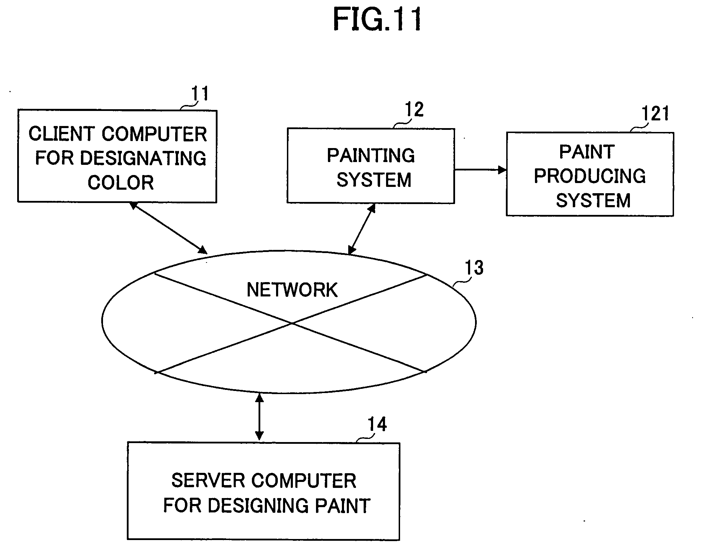

Likewise, the painting system may include the paint producing system, or the paint producing system may include the painting system. FIG. 11 shows another variation of the system in which the painting system 12 includes a paint producing system 121. Since the painting system 12 includes the paint producing system 121, and the ingredients are mixed at the painting line side, a required amount of paint can be produced when it is needed. The efficiency of paint production can thereby be improved. The term "painting line side" herein refers to the vicinity of the position at which painting equipment is disposed and objects are painted or the vicinity of a paint tank for supplying paint to the painting equipment.

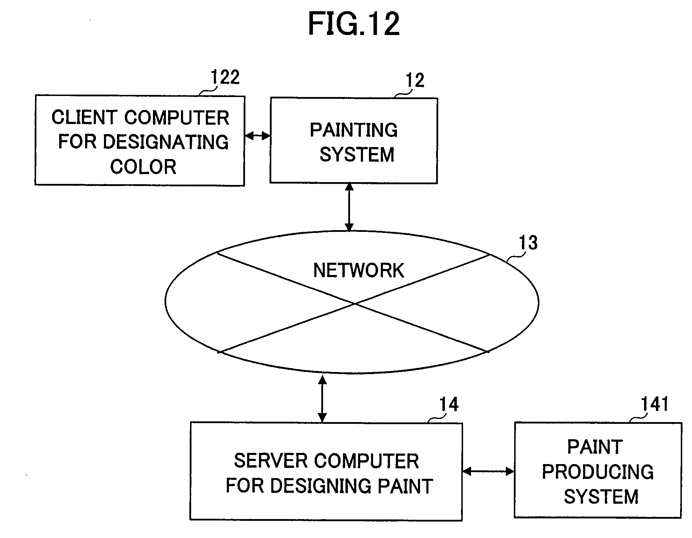

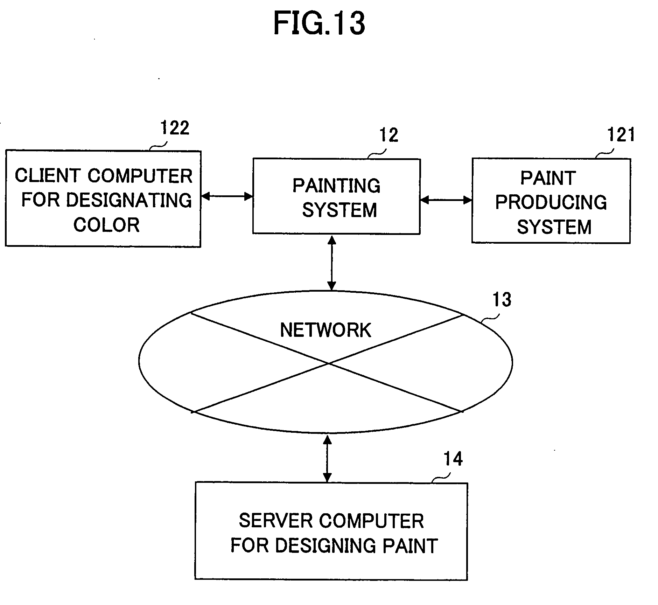

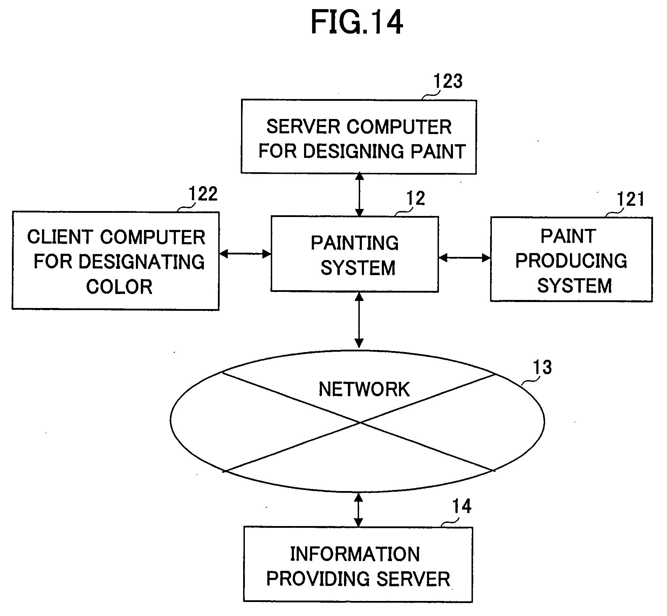

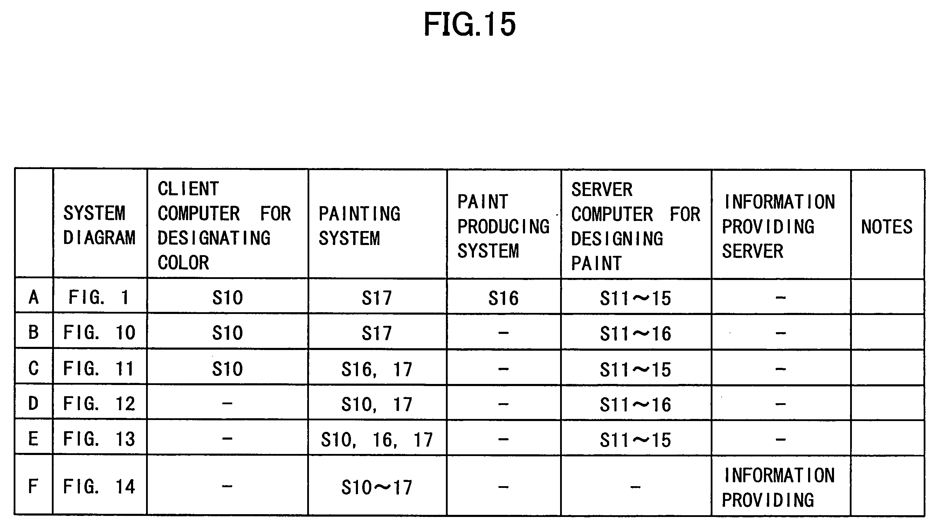

In the variation of the system shown in FIG. 10, the painting system may include the client computer. FIG. 12 shows yet another variation of the system in which the server computer 14 includes the paint producing system 141, and the painting system 12 includes the client computer 122.

Likewise, in the variation of the system shown in FIG. 11, the painting system may include the client computer. FIG. 13 shows yet another variation of the system in which the painting system 12 includes the paint producing system 121 and the client computer 122.

In the variation of the system shown in FIG. 13, the painting system may include the server computer. FIG. 14 shows yet another variation of the system in which the painting system 12 includes the paint producing system 121, the client computer 122, and the server 123.

An information providing server 14 may be provided in this case. The information providing server 14 provides the painting system 12 with a computer program for designing paint that causes a computer to perform the method of designing paint. The information providing server 14 further provides the painting system 12 with the raw material information database 22, the paint performance prediction information database 23, the required performance information database 24, the image / color conversion table 25, and designed paint information database 26.

FIG. 15 is a table showing the relation between the variations of the system and processing shown in FIG. 4. The second row "B" indicates that the variation includes the client computer 11, the painting system 12, and the server computer 14. It further indicates that: the client computer 11 performs step S10 in the flowchart shown in FIG. 4; the server computer 14 performs steps S11 through S16 in the flowchart shown in FIG. 4; and the painting system 12 performs step S17 in the flowchart shown in FIG. 4.

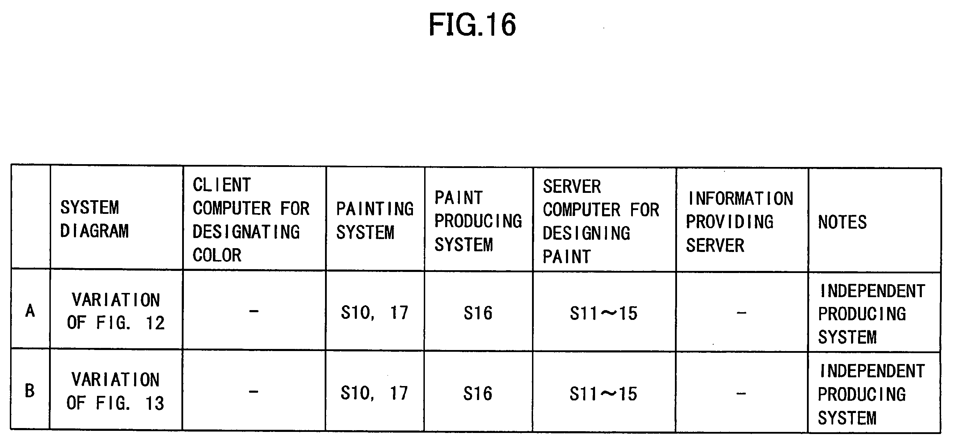

FIG. 16 is another table showing the relation between other variations of the system in which the paint producing system is made independent, and processing shown in FIG. 4 as variations of FIGs. 12 and 13.

The present invention is not limited to these embodiments, but various variations and modifications may be made without departing from the scope of the present invention.

This patent application is based on Japanese Priority Patent Application No. 2002-358077 filed on December 10, 2002, the entire contents of which are hereby incorporated by reference.

## Claims

1. A method of designing paint for a server computer, comprising the steps of:
acquiring color numerical information of a designated color from a client computer connected to the server computer;
determining ingredients of the paint based on the acquired color numerical information and paint ingredient information;
predicting performances of the ingredient-determined paint based on paint performance prediction information; and
verifying the predicted performances of the ingredient-determined paint.

2. The method as claimed in claim 1, wherein the step of acquiring color numerical information includes the step of converting color information corresponding to a color into the color numerical information based on an image/color conversion table.

3. The method as claimed in claims 1 or 2, wherein the client computer has a three dimensional color display unit through which the designated color is input.

4. The method as claimed in any one of the preceding claims, wherein the ingredients of the paint are determined by computer color matching.

5. The method as claimed in any one of the preceding claims, wherein at least one of painting workability, coating film performance, and paint performance is predicted as the performance of the ingredient-determined paint.

6. The method as claimed in any one of the preceding claims, wherein
the color numerical information acquired from the client computer is one of a multi angle spectral reflection factor and a various angle spectral reflection factor.

7. The method as claimed in any one of the preceding claims, wherein the step of verifying the predicted performances of the ingredient-determined paint further comprises the step of representing goodness of fit with discrete value between required performances and the predicted performances of the ingredient-determined paint.

8. A method of producing paint, comprising the steps of:
designing the paint as claimed in any one of the preceding claims; and
producing the ingredient-determined paint.

9. A method of mixing paint ingredients at a painting line side based on the determined ingredients thereby to form the ingredient-determined paint as claimed in any one of claims 1 through 7.

10. A method of painting an object with the produced paint as claimed in claim 8 or 9.

11. A computer program for causing a computer to perform the method of designing paint as claimed in any one of claims 1 through 7.

12. A computer readable recording medium storing the computer program as claimed in claim 11.

13. A server computer, comprising:
an acquiring unit that acquires color numerical information of a designated color from a client computer connected to the server computer;
a determining unit that determines ingredients of the paint based on the acquired color numerical information and paint ingredient information;
a predicting unit that predicts performances of the ingredient-determined paint based on paint performance prediction information; and
a verifying unit that verifies the predicted performances of the ingredient-determined paint.

14. The server computer as claimed in claim 13, further comprising a converting unit that converts color information corresponding to a color into the color numerical information by referring to an image/color conversion table.

15. The server computer as claimed in claim 13 or 14, wherein said verifying unit computes goodness of fit of the predicted performances of the ingredient-determined paint with reference to required performances stored in a database, and represents the goodness of fit with discrete values.
